# EUROPÄISCHE PATENTANMELDUNG

(11) **EP 4 744 860 A1**
(43) Veröffentlichungstag der Anmeldung: **20.05.2026**
(21) Anmeldenummer: 25225801.7
(22) Anmeldetag: 22.12.2022
(51) Int. Cl.: B29C 48/10, B29C 48/40, B29C 48/69, B29C 48/92, B29C 55/28, B29C 48/25, B29C 48/27, B29C 48/275, B29C 48/285

(54) **BLASFOLIENANLAGE UND VERFAHREN ZUM HERSTELLEN EINER FOLIENBAHN**

(30) Priorität: 22.12.2021 DE 102021134416
(62) Teilanmeldung aus: 22847118.1
(71) Anmelder: Reifenhäuser GmbH & Co. KG Maschinenfabrik, 53844 Troisdorf (DE)
(72) Erfinder: LETTOWSKY, Christoph, 52074 Aachen (DE); FISCHER, Peter, 53123 Bonn (DE); NENTWIG, Fabian, 53797 Lohmar (DE); NEUSS, Andreas, 67551 Worms (DE)
(74) Vertreter: Meissner Bolte Partnerschaft mbB

(57) **Zusammenfassung**

Die Erfindung betrifft eine Blasfolienanlage (10) und ein Verfahren zum Herstellen einer Folienbahn aus einem Recyclingmaterial (4) mit den folgenden Merkmalen: a. die Blasfolienanlage (10) verfügt über einen Extruder (20), zum Aufschmelzen und Homogenisieren des Recyclingmaterials (4) zu einer Schmelze, und b. die Blasfolienanlage (10) verfügt über eine Ringdüse (30) zum Extrudieren eines Folienschlauchs (6), und c. die Blasfolienanlage (10) verfügt über eine Führung für einen Schmelzestrom (40) zwischen dem Extruder (20) und der Ringdüse (30) über eine Ringdüsenschmelzepumpe (42), zum Fördern der Schmelze zur Ringdüse (30), und d. die Blasfolienanlage (10) verfügt über eine Schlauchbildungszone (32) zum Längs- und Querziehen des Folienschlauchs (6), e. die Blasfolienanlage (10) verfügt über ein Kühlmittel (34) für den sich in Maschinenrichtung bewegenden Folienschlauch (6), und f. die Blasfolienanlage (10) verfügt jenseits der Schlauchbildungszone (32) über eine Flachlegung (36) zum Flachlegen des Folienschlauchs (6) zu einer Doppellagenfolienbahn (8), und g. die Blasfolienanlage (10) verfügt über ein Abzugswalzenpaar (38) jenseits des Kühlmittels (34) zum Abziehen des Folienschlauchs (6), und h. der Extruder (20) ist als Doppelschneckenextruder ausgebildet.

## Beschreibung

Die Erfindung betrifft eine Blasfolienanlage, eine Verwendung eines Doppelschneckenextruders zum Speisen einer Ringdüse einer Blasfolienanlage und ein Verfahren zum Herstellen einer Folienbahn.

Genauer betrifft die Erfindung eine Blasfolienanlage zum Herstellen einer Folienbahn aus einem Recyclingmaterial, eine Verwendung eines Doppelschneckenextruders zum Speisen einer Ringdüse einer Blasfolienanlage und ein Verfahren zum Herstellen einer Folienbahn aus einem Recyclingmaterial.

Blasfolienanlagen sind in verschiedenen Ausgestaltungen bereits aus dem Stand der Technik bekannt. Die Blasfolienanlagen des Stands der Technik sind insbesondere auch bereits in der Lage eine Folienbahn aus Recyclingmaterial herzustellen. Dabei kann eine Blasfolienanlage gewöhnlich über einen Extruder verfügen, welcher zum Aufschmelzen und Homogenisieren des zu extrudierenden Materials zu einer Schmelze dient. Ferner ist insbesondere bekannt, dass eine Ringdüse zum Extrudieren eines Folienschlauchs vorgesehen ist und die Blasfolienanlage in einem Schmelzestrom zwischen dem Extruder und der Ringdüse über eine Ringdüsenschmelzepumpe zum Fördern der Schmelze zur Ringdüse verfügt. Die Blasfolienanlage kann außerdem über eine Schlauchbildungszone zum Längs- und Querziehen bzw. Längs- und Querstrecken des Folienschlauchs verfügen. Zusätzlich kann bei den Blasfolienanlagen im Stand der Technik auch ein Kühlmittel für den sich in Maschinenrichtung bewegenden Folienschlauch vorgesehen sein und die Blasfolienanlage kann jenseits der Schlauchbildungszone über eine Flachlegung zum Flachlegen des Folienschlauchs zu einer Doppellagenfolienbahn verfügen. Außerdem ist es möglich, dass im Stand der Technik die Blasfolienanlage ein Abzugswalzenpaar jenseits des Kühlmittels zum Abziehen des Folienschlauchs aufweist.

Nachteilhaft bei den bekannten Lösungen ist insbesondere, dass das Material - insbesondere einem Recycling zuzuführende Folien aus der Produktion und oder der Nutzung - zunächst zerkleinert, verschmolzen und pelletiert werden muss, bevor das Material im nächsten Schritt extrudiert werden kann. Dies kann unter anderem zu zusätzlich nötigen Prozessschritten, einer minderen Materialqualität und einem höheren Energieverbrauch führen.

### Aufgabe und Lösung

Es ist daher eine Aufgabe der vorliegenden Erfindung, die voranstehend beschriebenen Nachteile zumindest teilweise zu beheben. Insbesondere ist es Aufgabe der vorliegenden Erfindung schnelle Materialwechsel und Umstellzeiten, eine verbesserte Schmelzequalität mit hohem Rezyklatanteil, eine verbesserte Schichtverteilung, spannungs- und schrumpfarme und/oder -reiche Folien, einen hohen Automatisierungsgrad und/oder eine gute Bedienbarkeit bereitzustellen.

Die voranstehende Aufgabe wird gelöst durch ein Blasfolienanlage mit den Merkmalen des Anspruchs 1 und durch ein Verfahren mit den Merkmalen des Anspruchs 25. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Blasfolienanlage beschrieben sind, selbstverständlich auch im Zusammenhang mit dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Erfindungsgemäß wird eine Blasfolienanlage zum Herstellen einer Folienbahn aus einem Recyclingmaterial vorgeschlagen, welche übereinstimmend mit einer gattungsgemäßen Blasfolienanlage über einen Extruder zum Aufschmelzen und Homogenisieren des Recyclingmaterials zu einer Schmelze und über eine Ringdüse zum Extrudieren eines Folienschlauchs verfügen kann. Ferner weist die Blasfolienanlage insbesondere eine Ringdüsenschmelzepumpe in einer Führung für einen Schmelzestrom zwischen dem Extruder und der Ringdüse zum Fördern der Schmelze zur Ringdüse auf. Vorliegend soll der Schmelzestrom auch als Führung für einen solchen Schmelzestrom verstanden werden, so dass sich die Merkmale nicht zwangsweise auf eine Blasfolienanlage mit einer Schmelze beziehen, sondern sich auch auf eine Blasfolienanlage mit einer Führung für einen Schmelzestrom beziehen.

Außerdem kann vorgesehen sein, dass die Blasfolienanlage über eine Schlauchbildungszone zum Längs- und Querziehen des Folienschlauchs sowie über ein Kühlmittel für den sich in Maschinenrichtung bewegenden Folienschlauch verfügt. Zusätzlich kann die Blasfolienanlage jenseits der Schlauchbildungszone über eine Flachlegung zum Flachlegen des Folienschlauchs zu einer Doppellagenfolienbahn und über ein Abzugswalzenpaar jenseits des Kühlmittels zum Abziehen des Folienschlauchs verfügen.

Es wird ferner vorgeschlagen den Extruder der Blasfolienanlage als Doppelschneckenextruder auszubilden. Der Doppelschneckenextruder ist ein Mehrwellenextruder. In der Kunststofftechnik wird er zur Aufbereitung und Formgebung von Kunststoffschmelzen verwendet. Hierzu wird in diesem Fall das Recyclingmaterial oder eine Materialmischung mit dem Recyclingmaterial mittels zwei rotierender ineinandergreifender Schneckenwellen durch einen beheizten Zylinder gefördert und dabei aufgeschmolzen. Doppelschneckenextruder werden üblicherweise anhand des Achsabstands zwischen den beiden Schneckenwellen und deren Rotationsrichtung in tangierende oder dichtkämmende Gleichdralldoppelschneckenextruder oder in tangierende oder dichtkämmende Gegendralldoppelschneckenextruder unterschieden. Der Gegendralldoppelschneckenextruder bringt weniger Scherung in das zu extrudierende Material ein und belastet es daher wenig. Der Gegendralldoppelschneckenextruder wird daher bei der Verarbeitung von temperaturempfindlichen Materialien vorzugsweise verwendet. Vorliegend ist der Gleichdralldoppelschneckenextruder, insbesondere der dichtkämmende Gleichdralldoppelschneckenextruder besonders bevorzugt.

In anderen Worten lassen sich Doppelschneckenextruder in die gegenläufige und die gleichläufige Bauform unterteilen. Innerhalb dieser Bauformen wird zwischen kämmenden und nicht kämmenden Schnecken unterschieden. Bei kämmenden Schnecken greifen üblicherweise die Stege der einen Schnecke in die Gänge der anderen Schnecke während bei nicht kämmenden Schnecken sich die Schneckenprofile in axialer Richtung nicht überschneiden. Ein weiteres Unterscheidungsmerkmal ist die Lage der Schnecken zueinander.

Dabei wird üblicherweise zwischen parallelen Schnecken und konisch angeordneten Schnecken unterschieden.

Gegenläufig kämmende Doppelschneckenextruder bilden üblicherweise C-förmige, geschlossene Förderkammern aus, welche die Extrusionsmasse unabhängig von ihren tribologischen Eigenschaften durch den Extruder fördern. Diese Art des Stofftransports wird als Zwangsförderung bezeichnet. Die Schnecken drehen sich an der Oberseite - vergleichbar mit einer Zahnradpumpe - auseinander, um den Materialeinzug zu erleichtern. Durch die geschlossenen Förderkammern ist der Massedurchsatz vom Gegendruck im Wesentlichen unabhängig. Im Eingriffsbereich der Schnecken bildet sich eine Kalanderströmung aus, wodurch in den Spalten hohe Scherkräfte auftreten. Diese Kräfte lassen sich für das Dispergieren von Zusatzstoffen ausnutzen. Gegenläufige Doppelschneckenextruder werden vorwiegend zur Verarbeitung von PVC eingesetzt. Schwierigkeiten bei der Verarbeitung von PVC entstehen durch die Neigung zum Wandgleiten und die thermische Empfindlichkeit des Materials. Durch den Einsatz von gegenläufigen Doppelschneckenextrudern wird das Material zwangsgefördert und ein enges Verweilzeitspektrum erreicht. Zum einen wird dadurch dem Wandgleiten entgegengewirkt, zum anderen wird der übermäßige Abbau des Materials durch eine zu lange thermische Belastung verhindert.

Bei konischen Doppelschneckenextrudern sind die Schneckenachsen nicht mehr parallel sondern unter einem Winkel angeordnet, sodass sich der Achsabstand der Schnecken in Richtung Austragszone verringert. Die konische Bauform bietet unter anderem Vorteile einer kürzeren Baulänge bei vergleichbarem Durchsatz, geringerer Scherung im Austragsbereich aufgrund der abnehmenden Schneckenumfangsgeschwindigkeit und der erleichterten Drehmomenteinbringung durch die größeren Achsabstände. Es können drei wesentliche Unterscheidungen getroffen werden. Eine konstante, eine abnehmende oder eine zunehmende Gangtiefe können die Anpassung des benötigten Volumens an die jeweilige Aufgabe ermöglichen.

Doppelschneckenextruder mit gleichlaufenden, kämmenden Schnecken bilden in der Regel keine geschlossenen Förderkammern, sondern stellen ein axial offenes System dar. Es findet demzufolge keine Zwangsförderung statt, sondern die Förderung basiert größtenteils auf der sogenannten Schleppströmung. Die Schnecken rotieren bevorzugt mit gleicher Winkelgeschwindigkeit und gleicher Drehrichtung. Die Extrusionsmasse wird in Kanälen gefördert, welche beide Schnecken wendelförmig in Form einer Acht umschließen, wobei sich der Querschnitt geometriebedingt im Eingriffsbereich verengt. Ein Teil der Schmelze wird unabhängig von den Haftbedingungen zwangsgefördert; dies geschieht aufgrund der geometrischen Verhältnisse im Eingriffsbereich. An allen Punkten des Eingriffsbereichs gleiten beide Schnecken mit der gleichen Relativgeschwindigkeit dicht aneinander vorbei, dadurch wird die haftende Extrusionsmasse bei einem genügend engen Spiel zwischen den Schnecken abgestreift. Gleichläufige Doppelschneckenextruder stellen auch aufgrund dieses Selbstreinigungseffekts wichtige Aufbereitungsmaschinen dar.

Die gleichläufigen Doppelschneckenextruder finden heute in vielen Industriezweigen ihre Anwendungen. Das Hauptanwendungsgebiet heute (Basis der installierten Maschinen) ist mit großem Abstand die Kunststoffindustrie. Hier kommen gleichläufige Doppelschnecken vorwiegend in der Kunststoffaufbereitung, aber auch zunehmend in der Direktverarbeitung bei der Extrusion und beim Spritzgießen zum Einsatz. Hier zieht man insbesondere Vorteile aus der Einsparung einer weiteren Aufschmelzung (Energieeinsparung, Vermeidung von Schädigung der Polymere durch zweifaches Aufschmelzen) und der durch die Rezepturfreiheit sich ergebenden Flexibilität bei der Einstellung der Materialeigenschaften. Weitere bedeutende Anwendungsfelder für diese Maschinen sind die Kautschuk- und die Lebensmittelindustrie.

Zur Anpassung an eine Vielzahl an Verarbeitungs- und Produktanforderungen können Doppelschneckenextruder im Allgemeinen modular aufgebaut sein. Dies gilt sowohl für den Zylinder wie auch die Schnecken. Die Extruderschnecken bestehen bevorzugt aus Elementen, welche auf eine zentrale Welle geschoben und befestigt werden. Die Vorteile einer solchen Bauart sind unter anderem: leichte Veränderung der Schneckengeometrie für Versuchsaufbauten beim Anfahren von Anlagen oder bei geänderten Prozessbedingungen, Standardisierung der Schneckenelemente und die Bildung verschiedener und optimierter Verfahrenszonen.

Typische Verfahrenszonen eines Doppelschneckenextruders sind:
- die Einzugszone,
- die Aufschmelzzone,
- die distributive Mischzone,
- die dispersive Mischzone,
- die Entgasungszone und
- die Austragszone.

In der Einzugszone wird dem Extruder üblicherweise der feste Kunststoff zugeführt. Der Feststoff wird anschließend in Richtung der Austragszone gefördert und komprimiert. Eine weitere Aufgabe der Einzugszone besteht bevorzugt im Entfernen von miteingezogener Luft. Die Förderkapazität der Feststoffförderzone ist abhängig vom freien Schneckenvolumen, der Drehzahl und der Schüttdichte des Feststoffs.

Die Zuführung des Kunststoffs zum Doppelschneckenextruder kann dabei über einen Trichter und/oder über einen Side-Feeder erfolgen. In jedem Fall ist bei der Dosierung im Allgemeinen und der Auslegung von Trichtern und/oder Side-Feedern im Besonderen zu berücksichtigen, dass Kunststoffabfälle (Granulat und/oder Fluff) in Folge des geringen Schüttgewichts nur schwer fließfähig sind. Dies ist im Wesentlichen auf die ungünstige Form und das damit verbundene geringe Schüttgewicht zurückzuführen: Im Falle des Fluffs liegt es in der Natur des Materials selber ("Schnipsel"), im Fall von recyclierten Granulatkörnern an deren ungünstiger Kornform und einer ungleichmäßigen Kornformverteilung. Ohne besondere Maßnahmen kommt es beispielsweise im Trichter oftmals zur Brücken- oder Schachtbildung. Während die Brückenbildung den Massefluss vollständig unterbricht, kommt es bei der Schachtbildung zur Entmischung und zur Bildung von Totzonen beispielsweise im Trichter. Beide Effekte führen daher oftmals zu Produktionsunterbrechungen oder starken Durchsatzschwankungen. Begegnet werden kann diesem Problem in einfachen Fällen durch eine geeignete Trichterwandneigung. Nächster Schritt sind dann bevorzugt sogenannte Einzugseinbauten im Trichter. Führt auch dies nicht zum Erfolg, so kann, mit Rührwerk oder Kompressionsschnecke im Trichter gearbeitet werden.

Neben Polymeren in Granulat- oder Fluff-Form können im stromabwärtigen Bereich des Doppelschneckenextruders auch pulverförmige oder flüssige Zuschlagstoffe wie z.B. Füllstoffe (CaCO₃, TiO₂) oder Verarbeitungshilfsstoffe zugeführt werden.

Ein Vorteil des Doppelschneckenextruders ist, dass das Ausgangsmaterial nicht notwendigerweise wie beim Einschnecken-Extruder bevorzugt als Granulat vorliegen sollte, sondern auch die Zuführung in Form von Schnitzeln/Schnipseln sogenanntem "Fluff" möglich ist. Zur Erzeugung in die Form "Fluff" muss das Ausgangsmaterial von seiner ursprünglichen Gestalt z.B. in Form von Bahnware (z.B. als Rolle), Randstreifen, Verschnitten oder PCR-Ware nach dem Sortieren (Folie oder Laminat in der Größe DIN A6 bis DIN A0, oder größer), Schmelze-Klumpen, Folien-/Laminat-Fetzen, die zuvor für die nach der Sortierung und der Reinigung in einem ersten Schritt zerkleinert wurden, zerkleinert werden.

Die Zerkleinerung ist als Grundoperation praktisch für alle nachfolgenden Aufbereitungs- und Verwertungsverfahren Voraussetzung, wobei die gewählten Korngrößen an die nachfolgenden Prozesse angepasst sein müssen. Gleichzeitig sollen die Korngrößen nicht kleiner sein als notwendig, da mit der Zerkleinerung hohe Kosten verbunden sind. Außerdem ist neben einer geeigneten Korngröße eine gleichmäßige Korngrößenverteilung und Kornform erforderlichlich, da andernfalls unterschiedliche geometrische Abmessungen einen großen negativen Einfluss auf eine anschließende Sortierung ausüben.

Für die Zerkleinerungsleistung und den Zerkleinerungserfolg sind die Materialeigenschaften, insbesondere Zähigkeit, Elastizität und Wärmeformbeständigkeit des Aufgabegutes von entscheidender Bedeutung. Die Energieeinleitung ist, auf verschiedene Arten möglich. Jedoch führen bei Thermoplasten Beanspruchungen durch Druck, Scherung und Schlag oft nur zu unzureichenden Ergebnissen. Unter Normalbedingungen werden Druck und Schlag von Kunststoffkörnern zähelastisch abgefangen, während Scherung zum Aufschmelzen der Kunststoffpartikel führt. Daher werden in der großtechnischen Zerkleinerung vor allem die Beanspruchungsarten Schnitt und Prall angewendet.

Beim Schnitt wird das Korn aufgrund einer Scherbeanspruchung im Scherspalt längs der Schneidkante getrennt. Der Unterschied zwischen der Beanspruchungsform Scherung und Schnitt liegt also darin, dass beim Schnitt die Scherung sich lokal sehr begrenzt auf den Scherspalt auswirkt, während sich die Beanspruchungsform Scherung auf das gesamte Korn auswirkt. Daher führt Scherung bei Festkörpern nur zu unzureichenden Zerkleinerungsergebnissen.

Die Zerkleinerung des Korns durch Prall wird durch die Trägheitskräfte erreicht, indem vorhandene kinetische Energie beim Zusammenstoß mit einem oder mehreren Körnern oder durch Aufprall auf einen Festkörper bei hohen Relativgeschwindigkeiten in Verformungsarbeit umgesetzt wird. Der Unterschied zwischen den Beanspruchungen Druck, Schlag und Prall liegt in der Relativgeschwindigkeit der Teilchen zueinander bzw. zwischen Teilchen und Festkörper. Während bei der Beanspruchung Druck Relativgeschwindigkeiten < 5 m/s erzielt werden, betragen diese bei Schlag > 5 m/s. Bei der Zerkleinerung mittels Prall hingegen werden Relativgeschwindigkeiten zwischen 20 m/s und mehreren 100 m/s aufgebracht. Speziell bei der Feinstzerkleinerung werden sehr hohe Relativgeschwindigkeiten aufgebracht.

Zur Erzeugung von Fluff zur Speisung eines Doppelschneckenextruders aus den oben genannten Abfällen bietet sich die Zerkleinerung durch Schnitt an.

Zur Zerkleinerung durch Schnitt werden vor allem Schneidwalzenzerkleinerer (auch Rotorschere, Doppelwellenschneider oder Shredder/Schredder genannt) oder seltener Guillotinescheren (auch Spalter genannt) eingesetzt.

Beim Schneidwalzenzerkleinerer wird das zugeführte Material von Reißzähnen, die auf parallellaufenden, gegenläufig rotierenden Wellen angeordnet sind, erfasst und zwischen die Wellen eingezogen. Teilweise durch Schneiden und teilweise durch Zerreissen werden die Abfälle solange zerkleinert bis sie die ineinander kämmenden Walzen nach unten verlassen können.

Neben den Schneidwalzenzerkleinerern werden häufig Schneidmühlen eingesetzt. Diese Mühlen eignen sich für die Zerkleinerung zähelastischer Stoffe hervorragend und können daher für fast alle Kunststoffe eingesetzt werden. Schneidmühlen werden in unterschiedlichen Bauformen eingesetzt, die jedoch alle nach dem gleichen Prinzip arbeiten. Das zu zerkleinernde Gut gelangt durch die Schwerkraft über den Aufgabeschacht in den Einzugsbereich des an dieser Stelle offenen Rotors. Vom Rotor wird das Mahlgut umgewälzt und zwischen Rotor- und Statormessern fortlaufend zerkleinert. Wenn die Partikelgröße einzelner Körner kleiner sind als die Maschenweite des eingesetzten Siebbodens, verlassen sie den Mahlraum durch die Schwerkraft und teilweise durch die Fliehkraft.

Schneidwalzenzerkleinerer können die breite Vielfalt von Folien- und Laminatabfällen besonders gut aufnehmen und zu Fluff zerkleinern und eignen sich daher besonders bevorzugt für die Fluff-Erzeugung in einer Anlage mit einem gegenläufig kämmenden Doppelschneckenextruder in der Direktverarbeitung in der FolienExtrusion.

Die Aufschmelz- oder Plastifizierzone dient der Umwandlung des Feststoffs in Schmelze, des Weiteren sollen Füllstoffe vordispergiert werden. Abhängig von den nachfolgenden Verfahrenszonen ist es nicht immer notwendig, am Ende der Plastifizierzone einen Aufschmelzgrad von 100 % zu erreichen.

Unaufgeschmolzene Feststoffpartikel können in nachfolgenden Zonen, wie der dispersiven Mischzone, aufgeschmolzen werden. Die Aufgaben der distributiven Mischzone bestehen in der Verteilung von Feststoffen und Fluiden in der Schmelze sowie der Homogenisierung der Massetemperatur. Die Mischwirkung wird durch Aufteilen und Umleiten des Schmelzestroms erzielt. Mischelemente sind im Allgemeinen so ausgelegt, dass die scherintensive Dispersion minimiert wird, was zu einer reduzierten Selbstreinigung führt. In der dispersiven Mischzone sollen Feststoff- oder Polymeragglomerate sowie Flüssigkeitstropfen durch hohe Scherkräfte zerteilt werden. Neben der Schubspannung ist für die Zerteilwirkung auch die Dauer der Beanspruchung ausschlaggebend.

Die Entgasungszone dient dem Entfernen von Wasser, Restmonomeren und gelösten Gasen. Um ein Austreten der Schmelze durch die Entgasungsöffnung zu verhindern, muss der Druck der Schmelze zuvor dem Umgebungsdruck angepasst werden. Die Kanäle vor der Entgasungszone müssen vollständig gefüllt sein, um ein Extrahieren von noch nicht eingearbeiteten Komponenten oder das Ansaugen von Luft über den Einfülltrichter zu verhindern. Dies wird durch geeignete Abstauelemente erzielt.

Die Entgasung bietet die Möglichkeit, während des Verarbeitungsprozesses durch Extrusion niedermolekulare Bestandteile, Gase oder Luft aus der Schmelze zu entfernen. Jedoch sind die zu entgasenden Stoffe aufgrund der besonderen Zusammensetzung der Recyclingmaterialien teilweise verschieden.

Entgasungsaufgaben, die beim Recycling von Kunststoffen häufiger auftreten, sind:
- Trocknung: Entzug von Restfeuchtigkeit, wodurch unter Umständen auf eine aufwendige und teuere Vortrocknung des Materials verzichtet werden kann; Blasenbildung und Molekulargewichtsabbau durch Hydrolyse kann unterbunden werden.

- Verschiebung des Gleichgewichts: Werden niedermolekulare Komponenten insbesondere aus Polykondensaten entzogen, so wird das Gleichgewicht in Richtung hochmolekularer Ketten verschoben und es erfolgt ein Molekulargewichtsaufbau.
- Entfernen von äußeren Verschmutzungen: Leichtflüchtige, meist organische Verbindungen, die in Form von Verschmutzungen an den Kunststoffen haften, werden aus der Schmelze entfernt, z.B. Fette, Öle sowie teilweise Druckfarben oder Lacke.
- Entfernen von inneren Verschmutzungen: Stoffe, die während des Gebrauchs des Kunststoffs in das Material eindiffundiert sind und die nicht durch einen Waschprozess entfernt werden können, werden durch Entgasung entfernt, z.B. Benzin, Diesel, Frostschutzmittel.
- Entfernen von niedermolekularen Abbauprodukten: Während der Verarbeitung oder dem Gebrauch freigesetzte Abbauprodukte, die in Form von Kettenbruchstücken, Monomeren oder Oligomeren vorliegen und die Gebrauchs- wie die Verarbeitungseigenschaften des Kunststoffs nachhaltig verschlechtern, werden entfernt.
- Entgasung von Lösemitteln: Lösemittel, die aufgrund von teilweise eingesetzten Reinigungs- und Trennstufen der Aufbereitung ins Material gelangt sind, werden entfernt.

Allerdings werden mit der Entgasung gleichzeitig teilweise auch Stoffe entfernt, die im Material verbleiben sollten. Dies können kurzkettige Polymerbestandteile ebenso wie zugesetzte Additive, insbesondere Stabilisatoren, Antioxidantien, Lichtschutzmittel, Weichmacher usw. sein.

Für die Entgasungsleistung gelten die folgenden Zusammenhänge:
Mit zunehmender Temperatur werden Einflussgrößen wie Viskosität, Dampfdruck, Flüchtigkeit und Diffusionsgleichgewicht positiv beeinflusst und bewirken eine erhöhte Entgasungsleistung.

Mit fallendem Druck in der Entgasungszone steigt die Entgasungsleistung.

Eine große Phasengrenzfläche bei gleichzeitig geringer Schichtdicke begünstigt die Entgasung. Phasengrenzflächen und Schichtdicken sind durch die Abmessungen des Entgasungsapparates vorgegeben. Da die Schichtdicke nicht beliebig dünn ausgeführt werden kann, wird versucht, über ständige Oberflächenerneuerung, d.h. hohe Drehzahlen, die Entgasungsleistung zu steigern.

Eine hohe Verweilzeit in der Entgasungszone führt ebenfalls zu einer besseren Entgasungsleistung. Dieser Zusammenhang steht dem Bestreben nach Wirtschaftlichkeit und damit kurzen Verweilzeiten entgegen.

Ein Doppelschneckenextruder mit gleichlaufenden, kämmenden Schnecken wie er in der Direktverarbeitung eingesetzt wird besitzt vorteilhafterweise neben einer sogenannten atmosphärischen Entgasungszone mindestens eine bevorzugt jedoch zwei Entgasungszonen an denen ein Vakuum anliegt. Der Druck in einer solchen Verfahrenszone liegt in jedem Fall unter 1 bar bis hin zu 1 mbar. Typische Drucke liegen zwischen 800 und 10 mbar, bevorzugt zwischen 500 und 50 mbar.

Die Austragszone dient dem Aufbau des erforderlichen Drucks für die nachfolgenden Prozesse.

Bei der Schmelzefiltration von Kunststoffen wird das Material beim Schmelzen durch ein Filterelement geleitet, um Verunreinigungen und andere Feststoffe aus dem Kunststoff zu entfernen. Dabei wird der Kunststoff unter Druck und bei hohen Temperaturen durch ein Filterelement geleitet, das die Feststoffe aus dem Kunststoff herausfiltert. Die Schmelzefiltration ist ein wichtiger Schritt beim Recycling von Kunststoffen, da sie dazu beiträgt, die Qualität des recycelten Materials zu verbessern und möglichst viele Verunreinigungen zu entfernen. Sie wird häufig in Kombination mit anderen Techniken wie der Entgasung eingesetzt, um das recycelte Material so rein wie möglich zu machen.

Unter Filtrieren, Filtern oder Filtration versteht man im Allgemeinen das Abtrennen von festen oder flüssigen Teilchen aus Fluiden mit Hilfe eines Filtermediums. In der Extrusion hat daher die Filtration die Aufgabe, alle Arten von Fremdpartikeln, entsprechend einer gewählten Filterfeinheit, abzuscheiden und damit eine möglichst reine Schmelze zur Verfügung zu stellen.

Diese Problematik stellt sich in verstärktem Maße bei der Verarbeitung von Kunststoffabfällen, die trotz aufwendiger Reinigungsstufen bei der Aufbereitung immer noch in größerem Umfang Verschmutzungen enthalten, als dies bei Kunststoffneuware der Fall ist. Zur Prozessoptimierung und aus Gründen der Wirtschaftlichkeit sind von einer Schmelzefiltration folgende Forderungen zu erfüllen:
- Filtration bei annähernd konstantem Druck und konstanter Temperatur
- Filterwechsel ohne Unterbrechung und/oder Beeinflussung der Produktion
- Minimale zusätzliche Verweilzeit der Schmelze
- Minimaler Druckabfall in den Filtermedien
- Möglichst hohe Nutzungsdauer der Filter

Aufgrund der teilweise sehr hohen Verschmutzungsgrade bei Kunststoffabfällen stößt man bei den konventionellen Filtrationssystemen für Neuware bzgl. dieser Forderungen jedoch schnell an Grenzen. Bereits eine Fremdkörpermenge von 0,3 Vol.-% wird bereits als für die Filtration sehr große Menge an Verschmutzungen bezeichnet und selbst für ein Siebradfilter, der zu den kontinuierlich arbeitenden Filtersystemen zählt, gilt für wirtschaftliches Arbeiten eine Obergrenze von 0,5 Vol.-% Verschmutzungen.

Typische Filterfeinheiten hängen vom Einsatzgebiet und damit der verwendeten Schmelzeviskosität ab. Größere Filterfeinheiten werden eingesetzt, wenn der Produktionsprozess kontinuierlich läuft, wenig Rezeptur- und Batchwechsel benötigt werden und das Endprodukt eine hohe Reinheit erfordert, also geringe Druckschwankungen zulässt. Häufig werden Filterfeinheiten unter 50 µm, in Sonderfällen unter 15 µm. Siebwechsler dagegen sind für Verfahren mit häufigen Rezepturund/oder Farbwechseln und/oder hoher Kontamination der Schmelze häufig auf Filterfeinheiten > 50 µm verwendet. Typische Filterfeinheiten bei dem Einsatz von gleichläufigen Doppelschneckenextrudern in der Direktverarbeitung sind je nach Anwendung zwischen 20 µm und 200 µm. Geeignete Filterflächen besitzen hierbei Öffnungen zwischen 10 cm² bis 1,5 m² bevorzugt zwischen 50 cm² bis 500 cm².

Das komplette Verfahren der Doppelschneckenextruder (Zylinder und Schnecken) ist in der Regel modular aufgebaut und damit flexibel an die unterschiedlichen Verfahrensaufgaben anpassbar. Das Verfahren ist in der Regel elektrisch oder luftgekühlt oder luftgekühlt beheizt. Entsprechend haben Zylinder und Schnecken unterschiedliche Heiz- und Kühlzonen. Viele der oben genannten Merkmale bzw.

Wege werden aufgrund der hohen Drücke und Schmelzetemperaturen praktisch nicht mehr zur Anwendung kommen.

Die Längen von Schnecken und Zylindern werden bezogen auf den Schneckendurchmesser (L/D) angegeben. Die Nachfragen nach längeren Schnecken aufgrund der Anforderungen bei der Verarbeitung von Polymer-Blends, z.B. intensive Misch- und Knetvorgänge, mehrstufige Zuführungen (Side Feeder), intensive Entgasungen etc. in den letzten Jahrzehnten haben zu einer Verlängerung der L/D-Verhältnisse geführt. Im Bereich der Compoundierung, z.B. Herstellung von Masterbatches oder Compounds, erreichen die L/D-Verhältnisse inzwischen L/D = 40 bis 60. In der Folien-Extrusion werden gleichläufige Doppelschneckenextruder in der Regel mit L/D = 40 eingesetzt.

Übliche Gehäuse sind 3 oder 4 lang, in einigen Fällen werden aus wirtschaftlichen Gründen auch bis zu 8 ausgeführt. Gehäuse sind für die unterschiedlichen Verfahrensaufgaben ausgelegt. Diese Aufgaben entsprechen den typischen Verfahrenszonen Einziehen, Aufschmelzen, Zuführen, Mischen, Entgasen und Austragen/Rückbau.

Typische Drehzahlen eines gleichläufigen Doppelschneckenextruders lagen Mitte des vergangenen Jahrhunderts nach der Markteinführung zunächst im Bereich von 100-200 U/min. Heutzutage haben die maximalen Drehzahlen einen Bereich von 600-1500 U/min erreicht, was sich je nach Jahr der Inbetriebnahme zur Erhöhung der Schneckendurchmesser und damit der Durchsatzleistung erklärt. Als besonders hohe Schneckendrehzahlen von bis zu 2500 U/min genannt, die maximal verwendet werden, um die Homogenisierung von Polymeragglomeraten zu steigern. System- und verfahrensbedingt werden diese hohen Drehzahlen jedoch nur bei speziellen Anwendungen eingesetzt.

Für die erfindungsgemäße Auslegung des gleichläufigen Doppelschneckenextruders in der Direktverarbeitung in der Folienextrusion lagen die Schneckendrehzahlen zwischen 100 bis 600 U/min, bevorzugt 200 bis 500 U/min.

Für die erfindungsgemäße Auslegung des gleichläufigen Doppelschneckenextruders sind einige geometrische und antriebstechnische Kenngrößen entscheidend.

Das sogenannte Schneckendrehmoment ergibt sich aus dem an der Welle wirkenden Drehmoment und Innen- und Außendurchmesser (Da/Di) der Schnecke und der notwendigen Spiele in axialer Richtung. Die Auslegung der Schneckenachsen und der notwendigen Spiele in axialer Richtung werden durch die Größe der Schneckenquerschnittsfläche des Schneckenkerns beeinflusst. Die Größe dieser Querschnittsfläche ist ebenfalls ein Maß für die Verwindungssteifigkeit der Schnecken.

Typische Ausführungen eines gleichläufigen Doppelschneckenextruders verfügen über Schneckendurchmesser zwischen 12 mm und 260 mm bei großen Produktionsanlagen. Typische Auslegungen von gleichläufigen Doppelschneckenextrudern für die Direktverarbeitung in der Folienextrusion liegen zwischen 30 und 180 mm, bevorzugt zwischen 50 mm und 120 mm.

Für die mögliche Durchsatzleistung und Auslegung des Schneckendrehmoments sind außerdem spezifische Drehmomentkennzahlen von Bedeutung.

Das spezifische Drehmoment beträgt durchschnittlich in den letzten Jahren über die Markteinführung des gleichläufigen Doppelschneckenextruders in der Mitte des vergangenen Jahrhunderts hinweg 3 bis 5 Nm/cm³, typische Werte heute liegen bei 15 bis 20 Nm/cm³. Ein höheres spezifisches Drehmoment ermöglicht eine bessere Mischwirkung bei größerem Durchsatz. Außerdem bedeutet es, dass ein Polymer bei niedrigerer Verarbeitungsstemperatur (d. h. höherer Schmelzeviskosität) verarbeitet werden kann.

Beim Recyclingmaterial handelt es sich bevorzugt um Kunststoffabfälle oder um eine Mischung aus Kunststoffabfällen. Die Kunststoffabfälle können aus der Gruppe mit Polymeren ausgewählt sein, umfassend Polyethylen (PE), Polypropylen (PP), Polyvinylchlorid (PVC), Polystyrol (PS), Polyamide (PA), Polyethylenterephthalat (PET), Polybutylenterephthalat (PBT), Polylactide (PLA), Polyolefine, Copolymere (z.B. EVA, EBA), Elastomere, Cycloolefin-Copolymere (COC), Polycarbonate (PC), Acrylnitril-Butadien-Styrol (ABS), Thermoplastische Elastomere (TPE), TPU, TPO, Terpolymere (z.B. PMMA), Hochleistungsthermoplaste (PPS, PEEK) und biobasierte Kunststoffe.

Das Recyclingmaterial kann außerdem Additive (Antioxidantien, Antistatika, Farbmittel, Füllstoffe wie CaCO₃, TiO₂, Gleitmittel, Antiblockmittel, Haftvermittler usw.) enthalten. Der Doppelschneckenextruder weist eine besonders gute Mischwirkung auf, wodurch der Einsatz von Zusatzstoffen vorteilhaft möglich ist. Insbesondere ist der Einsatz von Zusatzstoffen möglich, um die Eigenschaften der Schmelze oder der Folie einzustellen.

Gemäß einer Ausgestaltung weist der Doppelschneckenextruder eine Entgasungszone auf, in der die Schmelze von niedermolekularen Bestandteilen befreit wird. Die Entgasungszone kann bevorzugt mit einer Vakuumpumpe verbunden sein, um eine effiziente Entgasung zu gewährleisten.

Der Filter ist bevorzugt in dem Schmelzestrom zwischen dem Extruder und der Ringdüse angeordnet. Der Filter kann als Siebwechsler ausgebildet sein. Vorzugsweise ist der Filter zwischen dem Extruder und der Ringdüsenschmelzepumpe angeordnet oder der Filter kann auch zwischen der Ringdüsenschmelzepumpe und der Ringdüse angeordnet sein.

Gemäß einer Ausgestaltung verfügt der Filter über eine Reinigungseinrichtung, welche das Filterelement automatisch oder manuell reinigen kann. Die Reinigungseinrichtung kann beispielsweise einen Abstreifer oder eine Rückspülvorrichtung aufweisen.

Gemäß einer Ausgestaltung verfügt die Reinigungseinrichtung über ein drehbares Filterelement oder ein verschiebbares Filterelement, welches während des Betriebs der Blasfolienanlage gereinigt werden kann, ohne dass die Anlage gestoppt werden muss.

Gemäß einer Ausgestaltung verfügt die Reinigungseinrichtung über eine Umlenkeinrichtung, welche den Schmelzestrom zeitweise umlenkt, um den Schmutz vom Filterelement zu entfernen.

Gemäß einer Ausgestaltung verfügt die Reinigungseinrichtung über mehrere Filterelemente, die abwechselnd gereinigt werden können, während ein anderes Filterelement im Einsatz ist.

Gemäß einer Ausgestaltung verfügt die Blasfolienanlage zwischen dem Extruder und der Ringdüse über eine Ringdüsenschmelzepumpe, welche die Schmelze zum Filter pumpt. Die Ringdüsenschmelzepumpe kann bevorzugt als Zahnradpumpe ausgebildet sein. In diesem Fall ist die Filterschmelzepumpe bevorzugt konstant in der Materialförderung.

Die Filterschmelzepumpe wird bevorzugt dazu eingesetzt, eine möglichst konstante Materialförderung zu realisieren, um Druckschwankungen im Schmelzestrom zu minimieren.

Die Entgasungseinheit, welche bevorzugt vor der Ringdüsenschmelzepumpe angeordnet ist, ermöglicht eine Extraktion von Verunreinigungen und Kontaminationen, ermöglicht eine Entgasung, eine Entfernung von Luft und flüchtigen Komponenten aus der Schmelze.

Die Entgasungseinheit kann als atmosphärische Entgasungseinheit ausgebildet sein. Bei dieser Ausgestaltung entgast die Schmelze ohne das Anlegen eines Unterdrucks.

Gemäß einer Ausgestaltung der Doppelschneckenextruder und/oder der Blasfolienanlage ist eine Unterdruck-Entgasungseinheit vorgesehen. Bei dieser Ausgestaltung entgast die Schmelze unter Unterdruck.

Gemäß einer Ausgestaltung ist die Entgasungseinheit als Vakuumentgasungseinheit ausgebildet, bei der der Druck deutlich unter Atmosphärendruck liegt.

Gemäß einer Ausgestaltung verfügt die Blasfolienanlage über mindestens eine Entgasungseinheit, bevorzugt zwei Entgasungseinheiten, die in Förderrichtung nacheinander angeordnet sind.

Gemäß einer Ausgestaltung verfügt die Blasfolienanlage über mindestens eine Druckerfassungseinrichtung zur Erfassung des Schmelzedrucks. Die Druckerfassungseinrichtung kann bevorzugt im Extruder oder im Schmelzestrom zwischen dem Extruder und der Ringdüse angeordnet sein.

Gemäß einer Ausgestaltung verfügt die Blasfolienanlage über mindestens zwei Druckerfassungseinrichtungen zur Erfassung des Schmelzedrucks. Der erste Drucksensor ist bevorzugt unmittelbar am Extruder angeordnet oder jenseits des Extruders. Der zweite Drucksensor ist bevorzugt unmittelbar vor der Ringdüse angeordnet oder jenseits der Ringdüse.

Gemäß einer Ausgestaltung verfügt die Blasfolienanlage über mindestens zwei zusätzliche Drucksensoren zur Erfassung des Schmelzedrucks im Schmelzestrom vor und nach dem Filter. Diese zusätzlichen Drucksensoren sind also Drucksensoren, welche zusätzlich zu den oben genannten Drucksensoren vorhanden sind. Diese zusätzlichen Drucksensoren können direkt vor und nach dem Filter verbaut sein. Es ist jedoch bevorzugt, dass die zusätzlichen Drucksensoren unmittelbar vor dem Filter und unmittelbar vor der Ringdüse positioniert sind. Bei dieser Gestaltung ist der zweite Drucksensor bevorzugt unmittelbar nach dem Filter positioniert.

Bevorzugt ist der Extruder und/oder die Ringdüsenschmelzepumpe und/oder die Recyclingmaterialzuführung und/oder die Umlenkeinrichtung des Filters und/oder die Filterelementwechselvorrichtung in Abhängigkeit des Schmelzedrucks vor und/oder nach dem Filter regulierbar.

Besonders bevorzugt ist der Extruder und/oder die Ringdüsenschmelzepumpe und/oder die Recyclingmaterialzuführung und/oder die Umlenkeinrichtung des Filters werden in Abhängigkeit der Drucksensoren zur Erfassung des Schmelzedrucks im Schmelzestrom am Extruder und vor der Ringdüse und der zusätzlichen Drucksensoren zur Erfassung des Schmelzedrucks im Schmelzestrom vor und nach dem Filter reguliert.

Gemäß einer Ausgestaltung verfügt die Blasfolienanlage über ein Lagersilo, zum Vorhalten des Recyclingmaterials.

Gemäß einer Ausgestaltung verfügt die Blasfolienanlage über eine Förderschnecke, welche das Recyclingmaterial von dem Lagersilo zu der Recyclingmaterialzuführung fördert. Die Förderschnecke ist bevorzugt horizontal oder im Wesentlichen horizontal angeordnet.

Gemäß einer Ausgestaltung verfügt das Lagersilo über ein Mittel zum Durchmischen des Recyclingmaterials innerhalb des Lagersilos. Dies ist bevorzugt, da somit mögliche Verstopfungen von Recyclingmaterials innerhalb des Lagersilos gelöst werden können. Das Mittel zum Durchmischen ist bevorzugt ein Kammsystem innerhalb des Lagersilos, es kann sich dabei aber auch beispielsweise um einen Schüttler handeln, welcher das Lagersilo schüttelt.

Gemäß einer Ausgestaltung verfügt das Lagersilo über ein Mittel zum Bestimmen dessen Füllgrades mit dem Recyclingmaterial. Das Mittel zum Bestimmen des Füllgrades kann eine Wiegeeinrichtung des Lagersilos sein. Es ist bevorzugt, dass es sich bei dem Mittel zum Bestimmen des Füllgrades um einen optischen und/oder kapazitiven Sensor handelt.

Gemäß einer Ausgestaltung verfügt das Lagersilo über ein Mittel zum Bestimmen dessen Recyclingmaterialverbrauchs. Das Mittel zum Bestimmen des Recyclingmaterialverbrauchs ist bevorzugt eine Wiegeeinrichtung des Lagersilos. Der Recyclingmaterialverbrauch kann so über eine Gewichtsabnahme pro Zeit erfasst werden.

Gemäß einer Ausgestaltung verfügt die Blasfolienanlage über ein Vorsilo, zum Befüllen des Recyclingmaterials in das Lagersilo.

Gemäß einer Ausgestaltung verfügt die Blasfolienanlage über einen Schredder zum Zerkleinern von einem Ausgangsmaterial. Bei dem Ausgangsmaterial kann es sich um einen Kunststoff oder einer Mischung eines Kunststoffes der oben genannten Gruppe handeln. Das Ausgangsmaterial kann in Form von Bahnware, zerkleinerter Bahnware, geschredderter Folie usw. vorliegen. Die zerkleinerte Bahnware kann in Größen von wenigen mm bis DIN A0 und größer großen Bahnwareteilen vorliegen. Der Schredder ist bevorzugt dazu ausgebildet das Ausgangsmaterial zu dem Recyclingmaterial zu zerkleinern. Das Recyclingmaterial liegt bevorzugt als Fluff vor. Das Recyclingmaterial kann in Form von Flocken vorliegen. Bevorzugt ist die Flockengröße des Recyclingmaterials zwischen 1 mm und 40 mm, besonders bevorzugt ist die Flockengröße des Recyclingmaterials zwischen 5 mm und 12 mm.

Gemäß einer Ausgestaltung verfügt die Blasfolienanlage über eine Transporteinrichtung zum Transportieren des Recyclingmaterials vom Schredder zum Lagersilo und/oder dem Vorsilo.

Bei einer Gestaltung mit Vorsilo ist es bevorzugt, dass die Transporteinrichtung ausschließlich in das Vorsilo fördert. Bevorzugt ist die Transporteinrichtung als Förderband und/oder als Förderschnecke oder als Druckfördersystem ausgebildet. Besonders bevorzugt ist eine Gestaltung mit einem Förderband mit Förderschnecke, da diese besonders kontinuierlich Material befördern kann.

Gemäß einer Ausgestaltung verfügt die Blasfolienanlage über ein Mischsilo zum Mischen des Recyclingmaterials mit weiteren Materialien. Die Blasfolienanlage kann auch mehrere Mischsilos umfassen. Das oder die Mischsilos können auch als Zwischenlager für verschiedene Recyclingmaterialien dienen. Es können auch andere extrudierbare Materialien neben Recyclingmaterialien in Mischsilos vorgehalten werden. Das Mischsilo verfügt bevorzugt über eine Mischeinrichtung innerhalb des Mischsilos.

Das Mischsilo ist bevorzugt über ein Gebläse und/oder ein Förderband und/oder eine Förderschnecke mit dem Lagersilo und/oder dem Vorsilo verbunden, zum Einbringen des Recyclingmaterials und/oder Mischungen davon.

Gemäß einer Ausgestaltung ist die Recyclingmaterialzuführung dazu ausgebildet neben dem Recyclingmaterial zusätzlich oder ersatzweise ein pelletiertes und/oder granuliertes Material aufzunehmen, um es zum Extruder zu fördern. Bei dem zusätzlichen Material kann es sich neben dem Recyclingmaterial auch um andere extrudierbare Materialien handeln.

Die Blasfolienanlage verfügt bevorzugt über eine Pellet-Dosiereinrichtung zum Vorhalten und Dosieren des pelletierten Materials. Bei dem pelletierten Material handelt es sich bevorzugt um Neuware und/oder höherwertiger Recyclate im Vergleich zu dem Recyclingmaterial.

Gemäß einer Ausgestaltung ist die Blasfolienanlage dazu ausgebildet die Folienbahn neben einer Schicht aus dem Recyclingmaterial mit mindestens einer weiteren Schicht herzustellen. Bevorzugt ist die Blasfolienanlage dazu ausgebildet eine Folienbahn mit 1 bis 11 oder 13 Schichten herzustellen, besonders bevorzugt ist die Blasfolienanlage dazu ausgebildet eine Folienbahn mit 1 bis 5 Schichten herzustellen.

Gemäß einer Ausgestaltung verfügt die Blasfolienanlage über mindestens einen zusätzlichen Extruder, welcher das Material zumindest einer zusätzlichen Schicht zu einer Schmelze aufschmelzt und homogenisiert. Bevorzugt handelt es sich bei den zusätzlichen Schichten um einen Kunststoff oder eine Mischung aus Kunstoffen der oben genannten Gruppe.

Bei dem zusätzlichen Extruder kann es sich um einen zusätzlichen Doppelschneckenextruder handeln.

Gemäß einer Ausgestaltung ist die Blasfolienanlage dazu ausgebildet eine Folienbahn herzustellen, bei der das Recyclingmaterial zwischen mindestens zwei weiteren Schichten in der Folienbahn angeordnet ist.

Gemäß einer Ausgestaltung werden zwei oder mehr Schichten von einem einzigen Extruder gebildet. Bei dieser Ausgestaltung ist es nicht zwingend notwendig, dass diese Schichten unmittelbar aufeinander liegen.

Gemäß einer Ausgestaltung verfügt die Blasfolienanlage über eine im Wesentlichen vertikal von unten nach oben ausgerichtete Maschinenrichtung.

Von der Erfindung ist ebenfalls die Verwendung eines Doppelschneckenextruders zum Speisen einer Ringdüse einer Blasfolienanlage umfasst. Die Blasfolienanlage ist bevorzugt gemäß einer der oberen Ausführungen ausgebildet.

Die Erfindung betrifft weiterhin ein Verfahren zum Herstellen einer Folienbahn aus einem Recyclingmaterial bevorzugt an einer Blasfolienanlage. Dabei ist vorgesehen, dass ein Doppelschneckenextruder das Recyclingmaterial zu einer Schmelze schmelzt und homogenisiert, anschließend wird die Schmelze über einen Schmelzestrom mit einer Ringdüsenschmelzepumpe zu einer Ringdüse gefördert. Die Schmelze wird über die Ringdüse zu einem Folienschlauch extrudiert und anschließend wird der Folienschlauch an einer Schlauchbildungszone längs- und quergezogen bzw. längs- und quergestreckt. Auf die Schlauchbildungszone folgt eine Flachlegung für den Folienschlauch, welche den Folienschlauch jenseits der Schlauchbildungszone zu einer Doppellagenfolienbahn zusammenlegt. Ein Abzugswalzenpaar jenseits der Flachlegung zum Abziehen des Folienschlauchs.

Der Schmelzestrom kann zusätzlich mittels eines Filters mit mindestens einem Filterelement innerhalb des Schmelzestroms filtriert werden, indem der Schmelzestrom von einer unfiltrierten Seite zu einer filtrierten Seite geleitet wird. Der Filter ist bevorzugt in dem Schmelzestrom zwischen dem Extruder und der Ringdüse angeordnet, vorzugsweise ist der Filter zwischen dem Extruder und der Ringdüsenschmelzepumpe angeordnet.

Das Filtersystem ist bevorzugt gemäß dem oben beschriebenen Filtersystem der Blasfolienanlage ausgebildet. Es kann eine Filterschmelzepumpe vorgesehen sein, welche zwischen dem Extruder und der Ringdüsenschmelzepumpe angeordnet ist, welche die Schmelze zum Filter pumpt, bzw. einen Druck innerhalb des Schmelzestroms zum Filtersystem erhöht.

Der Doppelschneckenextruder kann zusätzlich über mindestens eine oben beschriebene Entgasungseinheit verfügen, welche die Schmelze entgast, wodurch eine Extraktion von Verunreinigungen und Kontaminationen stattfindet.

Gemäß einer Ausgestaltung wird der Extruder über eine Recyclingmaterialzuführung mit einer oben beschriebenen Stopfschnecke mit dem Recyclingmaterial gefüllt.

Gemäß einer Ausgestaltung erfasst ein Drucksensor den Schmelzedruck im Schmelzestrom am Extruder, und ein weiterer Drucksensor den Schmelzedruck im Schmelzestrom vor der Ringdüse. Eine Steuer- und Regeleinrichtung regelt bevorzugt den Extruder und/oder die Ringdüsenschmelzepumpe und/oder die Recyclingmaterialzuführung in Abhängigkeit des Schmelzedrucks im Schmelzestrom am Extruder und/oder vor der Ringdüse. Dies ermöglicht ein konstantes Extrudieren von Recyclingmaterial.

Gemäß einer Ausgestaltung erfasst ein zusätzlicher Drucksensor den Schmelzedruck im Schmelzestrom vor dem Filter, und ein zusätzlicher Drucksensor erfasst den Schmelzedruck im Schmelzestrom nach dem Filter. Der erste Drucksensor erfasst den Schmelzedruck bevorzugt unmittelbar am Extruder oder jenseits des Extruders. Der zweite Drucksensor erfasst bevorzugt den Schmelzedruck vor der Ringdüse oder unmittelbar an der Ringdüse. In einer alternativen Ausgestaltung ist der zweite Drucksensor vor der Ringdüsenschmelzepumpe angeordnet und erfasst dort den Schmelzedruck.

Bevorzugt wird mittels des Drucksensors, der den Schmelzedruck unmittelbar an der Ringdüse erfasst, ein Abschaltdruck überwacht. Der Abschaltdruck soll darüber Aufschluss geben, ob ein Maximaldruck im Schmelzestrom erreicht wird. Dieser Maximaldruck im Schmelzestrom kann erreicht werden, wenn beispielsweise die Temperatur an der Ringdüse zu gering ist und das Recyclingmaterial nicht mehr durch die Ringdüse in der nötigen Menge gefördert werden kann. Der Drucksensor, der unmittelbar an der Ringdüse angeordnet ist, kann zur Regelung der Drehzahl der Ringdüsenschmelzepumpe verwendet werden. Ein weiterer Drucksensor zur Überwachung eines weiteren Abschaltdrucks kann unmittelbar vor dem Filter angeordnet sein. Der Drucksensor, der unmittelbar vor dem Filter angeordnet ist, kann auch eine Regelung der Reinigungseinrichtung aktivieren bzw. deaktivieren. Der Drucksensor, welcher unmittelbar nach dem Extruder angeordnet ist, wird bevorzugt zur Regelung der Extruderdrehzahl verwendet. Der Drucksensor, welcher unmittelbar nach dem Filter angeordnet ist, wird bevorzugt zur Regelung der Drehzahl der Filterschmelzepumpe und/oder der Drehzahl der Ringdüsenschmelzepumpe verwendet.

Gemäß einer Ausgestaltung regelt eine Steuer- und Regeleinrichtung den Extruder und/oder die Ringdüsenschmelzepumpe und/oder die Recyclingmaterialzuführung und/oder die Umlenkeinrichtung des Filters und/oder die Filterelementwechselvorrichtung in Abhängigkeit des Schmelzedrucks im Schmelzestrom vor und/oder nach dem Filter.

Besonders bevorzugt regelt die Steuer- und Regeleinrichtung den Extruder und/oder die Ringdüsenschmelzepumpe und/oder die Recyclingmaterialzuführung und/oder die Umlenkeinrichtung des Filters in Abhängigkeit der Drucksensoren zur Erfassung des Schmelzedrucks im Schmelzestrom am Extruder und vor der Ringdüse und der zusätzlichen Drucksensoren zur Erfassung des Schmelzedrucks im Schmelzestrom vor und nach dem Filter.

Im einfachsten Fall wird mittels der Drucksensoren der Druckabfall am Filter erfasst, also der Widerstand, den der Filter innerhalb des Filterstroms hat. Wird ein Schwellenwert überschritten kann die oben beschriebene Reinigungseinrichtung des Filters aktiviert werden, um das Filterelement des Filters zu erneuern.

Gemäß einer Ausgestaltung verfügt die Blasfolienanlage über eine Förderschnecke, welche das Recyclingmaterial von einem oben beschriebenen Lagersilo zu der Recyclingmaterialzuführung fördert.

Gemäß einer Ausgestaltung fördert die Förderschnecke das Recyclingmaterial von dem Lagersilo in Abhängigkeit des Füllstand des Lagersilos und/oder in Abhängigkeit des Recyclingmaterialverbrauchs und/oder in Abhängigkeit des Schmelzdrucks im Schmelzestrom an mindestens einem der oben beschriebenen Drucksensoren gemäß zu der Recyclingmaterialzuführung des Extruders.

Gemäß einer Ausgestaltung wird das Lagersilo in Abhängigkeit von dessen Füllstand mit dem Recyclingmaterial aus dem Vorsilo befüllt. Besonders bevorzugt wird das Lagersilo in Abhängigkeit von dessen Recyclingmaterialverbrauch mit dem Recyclingmaterial aus dem Vorsilo befüllt. Das Lagersilo wird bevorzugt derart befüllt, dass eine Mindestmenge von Recyclingmaterial im Lagersilo nicht unterschritten wird. Dies soll bewirken, dass eine konstate und einheitliche Zuführung des Recyclingmaterials, genauer gesagt des Fluffs, zum Doppelschneckenextruder erfolgt.

Gemäß einer Ausgestaltung wird das Recyclingmaterial in einem Mischsilo mit weiteren Materialien gemischt. Das Mischsilo ist zum Einbringen des Recyclingmaterials und/oder Mischungen davon in das Lagersilo bevorzugt über ein Gebläse und/oder ein Förderband und/oder eine Förderschnecke mit dem Lagersilo und/oder dem Vorsilo verbunden. Diese Gestaltung ermöglicht eine besonders konstante Materialzuführung zum Extruder und eine konstante Materialverarbeitung.

Gemäß einer Ausgestaltung wird ein Ausgangsmaterial von einem Schredder zu dem Recyclingmaterial geschreddert. Der Schredder ist bevorzugt nach einer oben beschriebenen Ausführungsform ausgebildet.

Gemäß einer Ausgestaltung transportiert eine Transporteinrichtung das Recyclingmaterial vom Schredder zum Lagersilo und/oder zum Vorsilo über ein Förderband oder ein Druckfördersystem. Wenn die Blasfolienanlage über ein Mischsilo verfügt, ist dieses bevorzugt ebenfalls mit geschreddertem Material vom Schredder zu befüllen.

Gemäß einer Ausgestaltung wird dem Extruder neben dem Recyclingmaterial zusätzlich oder ersatzweise ein pelletiertes Material, vorzugsweise ein pelletiertes Recyclingmaterial hinzugegeben. Gemäß einer Ausgestaltung wird das pelletierte Material über eine Pellet-Dosiereinrichtung dem Extruder bzw. der Recyclingmaterialzuführung hinzugegeben.

Gemäß einer Ausgestaltung wird in Abhängigkeit des Füllstandes des Lagersilos und/oder des Recyclingmaterialverbrauchs und/oder in Abhängigkeit des Schmelzdrucks im Schmelzestrom an einem der oben beschriebenen Drucksensoren dem Extruder neben dem Recyclingmaterial zusätzlich oder ersatzweise das pelletierte Material hinzugegeben.

Gemäß einer Ausgestaltung wird die Folienbahn mit dem Recyclingmaterial neben einer Schicht aus dem Recyclingmaterial mit mindestens einer weiteren Schicht eines weiteren Kunststoffes extrudiert.

Weitere Vorteile und Aspekte der Erfindung ergeben sich aus den Ansprüchen und aus der nachfolgenden Beschreibung eines bevorzugten Ausführungsbeispiels der Erfindung, welches nachfolgend anhand einer Figur erläutert ist.

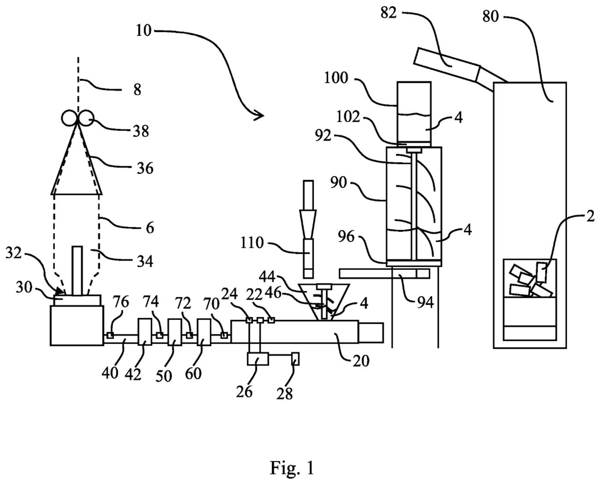

**Figur 1** zeigt ausschnittsweise ein schematisches Ausführungsbeispiel einer erfindungsgemäßen Blasfolienanlage.

### Detaillierte Beschreibung des Ausführungsbeispiels

Figur 1 zeigt eine erfindungsgemäße Blasfolienanlage 10, die zum Herstellen einer Folienbahn aus einem Recyclingmaterial 4 vorgesehen ist.

Die Blasfolienanlage 10 verfügt über einen Extruder 20, zum Aufschmelzen und Homogenisieren des Recyclingmaterials 4 zu einer Schmelze. Der Extruder 20 ist in diesem Ausführungsbeispiel horizontal am Boden angeordnet.

Der Extruder 20 ist als Doppelschneckenextruder ausgebildet. In diesem Ausführungsbeispiel handelt es sich um einen dichtkämmenden Gleichdralldoppelschneckenextruder.

Bei dem Recyclingmaterial 4 handelt es sich vorliegend um einen Kunststoff aus der Gruppe mit Polymerisaten, Polykondensaten, Polyethylene, Polypropylene, Plastomere, Ionomere, Ethylen-Copolymerisate, Cycloolefin-Copolymere, Polyamide, Thermoplastische Elastomere, Polyethylenterephthalate, Polyisobutylen, Biobasierte und bioabbaubare Kunststoffe.

Der Extruder 20 ist von einem Elektromotor angetrieben. Der Extruder 20 verfügt in diesem Ausführungsbeispiel sowohl über eine atmosphärische Entgasung als auch eine Unterdruck-Entgasungseinheit 24. Die Unterdruck-Entgasungseinheit 24 ist mit einer Vakuumpumpe 26 wirkverbunden. Die Unterdruck-Entgasungseinheit 24 verfügt über ein Mittel zum Auffangen von Kondensat.

Der Extruder 20 verfügt über eine Führung für einen Schmelzestrom 40 zu einer Ringdüse 30 zum Extrudieren eines Folienschlauches 6. Zwischen dem Extruder 20 und der Ringdüse 30 ist eine Ringdüsenschmelzepumpe 42 angeordnet, welche die Schmelze zur Ringdüse 30 fördert.

Die Blasfolienanlage 10 verfügt über eine Schlauchbildungszone 32 zum Längsund Querziehen des Folienschlauches 6. In der Schlauchbildungszone 32 ist ein Kühlmittel 34 für den sich in Maschinenrichtung bewegenden Folienschlauch 6 vorgesehen.

Jenseits der Schlauchbildungszone 32 ist eine Flachlegung 36 zum Flachlegen des Folienschlauches 6 zu einer Doppellagenfolienbahn 8 vorgesehen. Jenseits der Flachlegung 36 ist ein Abzugswalzenpaar 38 zum Abziehen des Folienschlauches 6 angeordnet.

Durch diese Gestaltung muss ein Druck im Schmelzestrom nicht ausschließlich vom Extruder 20 aufgebaut werden, sondern kann durch die Ringdüsenschmelzepumpe 42 aufgebaut, und/oder erhöht werden. Auf die Ringdüse 30 folgt eine Schlauchbildungszone 32 zum längs und quer ziehen des Folienschlauches 6. Die Blasfolienanlage 10 verfügt über ein Kühlmittel 34 für den sich in Maschinenrichtung bewegenden Folienschlauch 6. Bei dem Kühlmittel 34 handelt es sich vorliegend um Luft welche in den Blasfolienschlauch 6 eingeblasen bzw. angeblasen wird. Jenseits der Schlauchbildungszone 32 verfügt die Blasfolienanlage 10 über eine Flachlegung 36 zum Flachlegen 36 des Folienschlauchs 6 zu einer Doppellagenfolienbahn 8. Jenseits dieser Flachlegung 36 ist ein Abzugswalzenpaar 38 angeordnet, welches jenseits des Kühlmittels 34 zum Abziehen des Folienschlauch 6 vorgesehen ist.

In diesem Ausführungsbeispiel verfügt die Blasfolienanlage 10 über einen Filter 50, welcher zwischen der Ringdüsenschmelzepumpe 42 und dem Extruder 20 angeordnet ist. Zwischen dem Filter 50 und dem Extruder 20 ist in diesem Ausführungsbeispiel eine Filterschmelzepumpe 60 angeordnet. Der Extruder 20 verfügt außerdem über eine Recyclingmaterialzuführung 44 mit einer Stopfschnecke 46. Die Stopfschnecke 46 ist von einem Elektromotor angetrieben. In diesem Ausführungsbeispiel verfügt die Blasfolienanlage 10 über einen Schredder 80 in welchen ein Ausgangsmaterial 2 gespeist werden kann welches zu dem Recyclingmaterial 4 zerkleinert wird. Das Ausgangsmaterial 2 kann ein Kunststoff aus der oben genannten Gruppe sein. Das Ausgangsmaterial 2 kann in Form von Bahnware, zerkleinerter Bahnware, geschredderter Folie usw. vorliegen. Der Schredder 80 zerkleinert das Ausgangsmaterial 2 in Flocken zwischen 5 mm und 12 mm Größe. Der Schredder 80 verfügt über eine Transporteinrichtung 82 welche das geschredderte Recyclingmaterial 4 zu einem Vorsilo 100 fördert. Das Vorsilo 100 ist über dem Lagersilo 90 angeordnet und verfügt über eine Dosiereinrichtung 102, über welche das Recyclingmaterial 4 bei Bedarf in das Lagersilo 90 abgegeben werden kann. Die Dosiereinrichtung 102 ist in diesem Ausführungsbeispiel als Schieber ausgebildet. Das Lagersilo 90 verfügt über ein Mittel zum Durchmischen des Recyclingmaterials 92, welches in diesem Ausführungsbeispiel als Rührwerk ausgebildet ist. Von dem Lagersilo 90 wird das Recyclingmaterial 4 über eine Förderschnecke 94 in die Recyclingmaterialzuführung 44 am Extruder 20 geführt.

Das Lagersilo 90 verfügt über Mittel zum Bestimmen des Recyclingmaterialverbrauchs. In diesem Ausführungsbeispiel ist das Mittel zum Bestimmen des Recyclingmaterialverbrauchs als eine Wiegeeinrichtung des Lagersilos 96 ausgebildet. Dadurch kann der Verbrauch des Recyclingmaterials 4 in Gewichteinheit pro Zeiteinheit ermittelt werden. In diesem Ausführungsbeispiel ist das Mittel zum Bestimmen des Füllstandes des Lagersilos 90 von der Wiegeeinrichtung des Lagersilos 96 realisiert. Sobald der Füllstand und damit das Gewicht des Lagersilos 90 unter einen vorbestimmten Wert fällt, wird das Lagersilo 90 mit Recyclingmaterial 4 aus dem Vorsilo 100 gefüllt.

Die Recyclingmaterialzuführung 44 ist dazu ausgebildet neben dem Recyclingmaterial 4 zusätzlich oder ersatzweise ein pelletiertes Recyclingmaterial 4 aufzunehmen, um es zum Extruder 20 zu fördern. Für diesen Zweck verfügt die Blasfolienanlage 10 über eine PelletDosiereinrichtung 110 zum Vorhalten und Dosieren des pelletierten Materials. Bei dem pelletierten Material handelt es sich bevorzugt um Neuware und/oder höherwertiger Recyclate im Vergleich zu dem Recyclingmaterial.

Der Abschaltdruck gibt darüber Aufschluss, ob ein Maximaldruck im Schmelzestrom erreicht ist. Dieser Maximaldruck im Schmelzestrom kann erreicht werden, wenn beispielsweise die Temperatur an der Ringdüse 30 zu gering ist und das Recyclingmaterial 4 nicht mehr durch die Ringdüse 30 in der nötigen Menge gefördert werden kann. Der Drucksensor 76, der unmittelbar an der Ringdüse 30 angeordnet ist, wird zur Regelung der Drehzahl der Ringdüsenschmelzepumpe 42 verwendet. Ein weiterer Drucksensor 72 zur Überwachung eines weiteren Abschaltdrucks ist unmittelbar vor dem Filter 50 angeordnet. Der Drucksensor 72, der unmittelbar vor dem Filter 50 angeordnet ist, wird auch für eine Regelung der Reinigungseinrichtung verwendet. Der Drucksensor 70, welcher unmittelbar nach dem Extruder 20 angeordnet ist, wird zur Regelung der Extruderdrehzahl verwendet. Der Drucksensor 74, welcher unmittelbar nach dem Filter 50 angeordnet ist, wird zur Regelung der Drehzahl der Filterschmelzepumpe 60 und der Drehzahl der Ringdüsenschmelzepumpe 42 verwendet.

### Aspekte der Erfindung

1. Blasfolienanlage (10) zum Herstellen einer Folienbahn aus einem Recyclingmaterial
   (4) mit den folgenden Merkmalen:
      a. die Blasfolienanlage (10) verfügt über einen Extruder (20), zum Aufschmelzen und Homogenisieren des Recyclingmaterials (4) zu einer Schmelze, und
      b. die Blasfolienanlage (10) verfügt über eine Ringdüse (30) zum Extrudieren eines Folienschlauchs (6), und
      c. die Blasfolienanlage (10) verfügt über eine Führung für einen Schmelzestrom (40) zwischen dem Extruder (20) und der Ringdüse (30) über eine Ringdüsenschmelzepumpe (42), zum Fördern der Schmelze zur Ringdüse (30), und
      d. die Blasfolienanlage (10) verfügt über eine Schlauchbildungszone (32) zum Längs- und Querziehen des Folienschlauchs (6),
      e. die Blasfolienanlage (10) verfügt über ein Kühlmittel (34) für den sich in Maschinenrichtung bewegenden Folienschlauch (6), und
      f. die Blasfolienanlage (10) verfügt jenseits der Schlauchbildungszone (32) über eine Flachlegung (36) zum Flachlegen des Folienschlauchs (6) zu einer Doppellagenfolienbahn (8), und
      g. die Blasfolienanlage (10) verfügt über ein Abzugswalzenpaar (38) jenseits des Kühlmittels (34) zum Abziehen des Folienschlauchs (6), und
   gekennzeichnet durch das weitere Merkmal:
      h. der Extruder (20) ist als Doppelschneckenextruder ausgebildet.
2. Blasfolienanlage (10) gemäß Aspekt 1 mit den folgenden weiteren Merkmalen:
   a. die Blasfolienanlage (10) verfügt über einen Filter (50) mit mindestens einem Filterelement (52), zum Filtern (50) der Schmelze von einer unfiltrierten Seite zu einer filtrierten Seite, und
   b. der Filter (50) ist in der Führung für den Schmelzestrom (40) zwischen dem Extruder (20) und der Ringdüse (30) angeordnet, vorzugsweise ist der Filterzwischen dem Extruder (20) und der Ringdüsenschmelzepumpe (42) angeordnet.
      Blasfolienanlage (10) gemäß Aspekt 2 mit den folgenden weiteren Merkmalen:
         a. der Filter (50) verfügt über eine Reinigungseinrichtung, welche das Filterelement (52) kontinuierlich und/oder diskontinuierlich erneuert,
      vorzugsweise mit mindesten einem der folgenden zusätzlichen Merkmale:
         b. die Reinigungseinrichtung ist dazu ausgebildet das Filterelement (52) während des Betriebes der Anlage, also während dem Herstellen einer Folienbahn, zu erneuern.
         c. die Reinigungseinrichtung verfügt über ein drehbares Filterelement (52) oder über ein drehbares Reinigungselement, zur Erneuerung des Filterelements (52).
         d. die Reinigungseinrichtung verfügt über ein gegenüber dem Schmelzestrom bewegbares Filterelement (52) oder über ein gegenüber dem Schmelzestrom bewegbares Reinigungselement, zur Erneuerung des Filterelements (52).
         e. die Reinigungseinrichtung verfügt über eine Umlenkeinrichtung, zum Reinigen des Filterelements (52), indem die Schmelze zeitweise von der filtrierten Seite zu der unfiltrierten Seite, also entgegen des üblichen Schmelzestroms geleitet wird.
         f. die Reinigungseinrichtung verfügt über einen Reinigungsausgang, durch den die Schmelze, welche von der filtrierten Seite zu der unfiltrierten Seite geleitet wurde, abzugeben.
         g. die Reinigungseinrichtung verfügt über eine Siebwechsler, welche dazu ausgebildet ist, den Schmelzestrom durch mehrere Filterelemente (52) zu leiten, und h. die Reinigungseinrichtung ist dazu ausgebildet den Schmelzestrom wahlweise durch einzelne und/oder durch alle verfügbaren Filterelemente (52) zu leiten.
3. Blasfolienanlage (10) gemäß einem der vorherigen Aspekte mit dem folgenden weiteren Merkmal:
   a. die Blasfolienanlage (10) verfügt zwischen dem Extruder (20) und der Ringdüsenschmelzepumpe (42) über eine Filterschmelzepumpe (60), welche die Schmelze zum Filter (50) pumpt.
4. Blasfolienanlage (10) gemäß einem der vorherigen Aspekte mit mindestens einem der folgenden weiteren Merkmalen:
   a. der Doppelschneckenextruder verfügt über mindestens eine Entgasungseinheit (22), welche eine Extraktion von Verunreinigungen und Kontaminationen ermöglicht,
   vorzugsweise mit mindesten einem der zusätzlichen weiteren Merkmale:
   b. mindestens eine Entgasungseinheit (22) ist als atmosphärische Entgasungseinheit (22) ausgebildet.
   c. mindestens eine Entgasungseinheit (22) ist als Unterdruck-Entgasungseinheit (24) ausgebildet.
5. Blasfolienanlage (10) gemäß Aspekt 5 mit mindestens einem der folgenden weiteren Merkmalen:
   a. Die Unterdruck-Entgasungseinheit (24) verfügt über ein Mittel zum Auffangen von Kondensat, welches bei der Unterdruck-Entgasung anfällt.
6. Blasfolienanlage (10) gemäß einem der vorherigen Aspekte mit dem folgenden weiteren Merkmal:
   a. der Extruder (20) verfügt über eine Recyclingmaterialzuführung (44) mit einer Stopfschnecke (46).
7. Blasfolienanlage (10) gemäß einem der vorherigen Aspekte mit den folgenden weiteren Merkmalen:
   a. die Blasfolienanlage (10) verfügt über mindestens zwei Drucksensoren (70, 72, 74, 76) zur Erfassung von Drücken innerhalb der Führung für den Schmelzestrom (40), jeweils im Schmelzestrom am Extruder (20) und vor der Ringdüse (30), und
   b. der Extruder (20) und/oder die Ringdüsenschmelzepumpe (42) und/oder die Recyclingmaterialzuführung (44) sind in Abhängigkeit des Schmelzedrucks im Schmelzestrom am Extruder (20) und/oder vor der Ringdüse (30) regulierbar.
8. Blasfolienanlage (10) gemäß einem der vorherigen Aspekte mit den folgenden weiteren Merkmalen:
   a. die Blasfolienanlage (10) verfügt über zwei zusätzliche Drucksensoren (70, 72, 74, 76) zur Erfassung des Schmelzedrucks im Schmelzestrom vor und nach dem Filter (50), und
   b. der Extruder (20) und/oder die Ringdüsenschmelzepumpe (42) und/oder die Recyclingmaterialzuführung (44) und/oder die Umlenkeinrichtung des Filters (50) und/oder die Filterelementwechselvorrichtung sind in Abhängigkeit des Schmelzedrucks vor und/oder nach dem Filter (50) regulierbar.
   vorzugsweise mit dem zusätzlichen Merkmal:
   c. der Extruder (20) und/oder die Ringdüsenschmelzepumpe (42) und/oder die Recyclingmaterialzuführung (44) und/oder die Umlenkeinrichtung des Filters (50) sind in Abhängigkeit der Drucksensoren (70, 72, 74, 76) zur Erfassung des Schmelzedrucks im Schmelzestrom am Extruder (20) und vor der Ringdüse (30) und der zusätzlichen Drucksensoren (70, 72, 74, 76) zur Erfassung des Schmelzedrucks im Schmelzestrom vor und nach dem Filter (50) regulierbar.
   8. Blasfolienanlage (10) gemäß einem der vorherigen Aspekte mit dem folgenden weiteren Merkmal:
   a. die Blasfolienanlage (10) verfügt über ein Lagersilo (90), zum Vorhalten des Recyclingmaterials (4).
9. Blasfolienanlage (10) gemäß einem der vorherigen Aspekte mit dem folgenden weiteren Merkmal:
   a. die Blasfolienanlage (10) verfügt über eine Förderschnecke (94), welche das Recyclingmaterial (4) von dem Lagersilo (90) zu der Recyclingmaterialzuführung (44) fördert.
10. Blasfolienanlage (10) gemäß einem der vorherigen Aspekte mit dem folgenden weiteren Merkmal:
   a. das Lagersilo (90) verfügt über ein Mittel zum Durchmischen des Recyclingmaterials (92) innerhalb des Lagersilos (90).
11. Blasfolienanlage (10) gemäß einem der vorherigen Aspekte mit dem folgenden weiteren Merkmal:
   a. das Lagersilo (90) verfügt über ein Mittel zum Bestimmen dessen Füllstand mit dem Recyclingmaterial (4).
12. Blasfolienanlage (10) gemäß einem der vorherigen Aspekte mit dem folgenden weiteren Merkmal:
   a. das Lagersilo (90) verfügt über ein Mittel zum Bestimmen dessen Recyclingmaterialverbrauchs,
   vorzugsweise mit dem zusätzlichen Merkmal:
   b. das Mittel zum Bestimmen des Recyclingmaterialverbrauchs ist eine Wiegeeinrichtung des Lagersilos (96).
13. Blasfolienanlage (10) gemäß einem der vorherigen Aspekte mit dem folgenden weiteren Merkmal:
   a. die Blasfolienanlage (10) verfügt über ein Vorsilo (100), zum Befüllen des Recyclingmaterials (4) in das Lagersilo (90).
14. Blasfolienanlage (10) gemäß einem der vorherigen Aspekte mit den folgenden weiteren Merkmalen:
   a. die Blasfolienanlage (10) verfügt über einen Schredder (80) zum Zerkleinern von einem Ausgangsmaterial (2), und
   b. der Schredder (80) ist dazu ausgebildet das Ausgangsmaterial (2) zu dem Recyclingmaterial (4) zu zerkleinern.
15. Blasfolienanlage (10) gemäß einem der vorherigen Aspekte mit den folgenden weiteren Merkmalen:
   a. die Blasfolienanlage (10) verfügt über eine Transporteinrichtung (82) zum Transportieren des Recyclingmaterials (4) vom Schredder (80) zum Lagersilo (90) und/oder dem Vorsilo (100), und
   b. die Transporteinrichtung (82) ist als Förderband und/oder als Förderschnecke oder als Druckfördersystem ausgebildet.
16. Blasfolienanlage (10) gemäß einem der vorherigen Aspekte mit den folgenden weiteren Merkmalen:
   a. die Blasfolienanlage (10) verfügt über mindestens ein Mischsilo zum Mischen des Recyclingmaterials (4) mit weiteren Materialien
   vorzugsweise mit dem zusätzlichen Merkmal:
   b. das Mischsilo ist über ein Gebläse und/oder ein Förderband und/oder eine Förderschnecke mit dem Lagersilo (90) und/oder dem Vorsilo (100) verbunden, zum Einbringen des Recyclingmaterials (4) und/oder Mischungen davon.
17. Blasfolienanlage (10) gemäß einem der vorherigen Aspekte mit dem folgenden weiteren Merkmal:
   a. die Recyclingmaterialzuführung (44) ist dazu ausgebildet neben dem Recyclingmaterial (4) zusätzlich oder ersatzweise ein pelletiertes Recyclingmaterial (4) aufzunehmen, um es zum Extruder (20) zu fördern, vorzugsweise mit mindesten einem der zusätzlichen Merkmale:
   b. die Blasfolienanlage (10) verfügt über eine Pellet-Dosiereinrichtung (110) zum Vorhalten und Dosieren des pelletierten Materials.
   c. bei dem pelletierten Material handelt es sich um Neuware und/oder um höherwertigere Recyclate im Vergleich zu dem Recyclingmaterial.
18. Blasfolienanlage (10) gemäß einem der vorherigen Aspekte mit dem folgenden weiteren Merkmal:
   a. die Pellet-Dosiereinrichtung (110) verfügt über eine Förderschnecke, welche das Recyclingmaterial (4) zum Extruder (20) fördert.
19. Blasfolienanlage (10) gemäß einem der vorherigen Aspekte mit den folgenden weiteren Merkmalen:
   a. die Blasfolienanlage (10) ist dazu ausgebildet die Folienbahn neben einer Schicht aus dem Recyclingmaterial (4) mit mindestens einer weiteren Schicht herzustellen, und
   b. die Blasfolienanlage (10) verfügt über mindestens einen zusätzlichen Extruder (20), welcher das Material zumindest einer zusätzlichen Schicht zu einer Schmelze aufschmelzt und homogenisiert.
   vorzugsweise mit dem zusätzlichen Merkmal:
   c. der zusätzliche Extruder ist als Doppelschneckenextruder ausgebildet.
20. Blasfolienanlage (10) gemäß dem vorherigen Aspekt mit dem folgenden weiteren Merkmal:
   a. die Blasfolienanlage (10) ist dazu ausgebildet eine Folienbahn herzustellen, bei der das Recyclingmaterial (4) zwischen mindestens zwei weiteren Schichten in der Folienbahn angeordnet ist.
21. Blasfolienanlage (10) gemäß dem vorherigen Aspekt mit dem folgenden weiteren Merkmal:
   a. die Blasfolienanlage (10) verfügt über eine im Wesentlichen vertikal von unten nach oben ausgerichtete Maschinenrichtung.
22. Verwendung eines Doppleschneckenextruders zum Speisen einer Ringdüse (30) einer Blasfolienanlage (10).
23. Verfahren zum Herstellen einer Folienbahn aus einem Recyclingmaterial (4) insbesondere nach einem der Aspekte 1 bis 23, mit den folgenden Merkmalen:
   a. ein Doppelschneckenextruder schmelzt und homogenisiert das Recyclingmaterial (4) zu einer Schmelze,
   b. über einen Schmelzestrom mit einer Ringdüsenschmelzepumpe (42) wird die Schmelze zu einer Ringdüse (30) gefördert,
   c. die Schmelze wird über die Ringdüse (30) zu einem Folienschlauch (6) extrudiert, und
   d. an einer Schlauchbildungszone (32) wird der Folienschlauch (6) längs- und quergezogen,
   e. eine Flachlegung (36) für den Folienschlauch (6) legt den Folienschlauch (6) jenseits der Schlauchbildungszone (32) zu einer Doppellagenfolienbahn (8) zusammen, und
   f. die Blasfolienanlage (10) verfügt über ein Abzugswalzenpaar (38) jenseits der Flachlegung (36) zum Abziehen des Folienschlauchs (6).
26. Verfahren nach Aspekt 25, mit dem folgenden weiteren Merkmal:
   a. der Schmelzestrom wird mittels eines Filters (50) mit mindestens einem Filterelement (52) innerhalb des Schmelzetroms filtriert, indem der Schmelzestrom von einer unfiltrierten Seite zu einer filtrierten Seite geleitet wird.
   b. der Filter (50) ist in dem Schmelzestrom zwischen dem Extruder (20) und der Ringdüse (30) angeordnet, vorzugsweise ist der Filter (50) zwischen dem Extruder (20) und der Ringdüsenschmelzepumpe (42) angeordnet.
27. Verfahren nach einem der vorherigen Aspekte 25 bis 26, mit den folgenden weiteren Merkmalen:
   a. das Filterelement (52) ist gemäß einem der Aspekte 2 oder 3 ausgebildet.
28. Verfahren nach einem der vorherigen Aspekte 25 bis 27, mit den folgenden weiteren Merkmalen:
   a. eine Filterschmelzepumpe (60), welche zwischen dem Extruder (20) und der Ringdüsenschmelzepumpe (42) angeordnet ist, pumpt die Schmelze zum Filter (50).
29. Verfahren nach einem der vorherigen Aspekte 25 bis 28, mit den folgenden weiteren Merkmalen:
   a. die Schmelze wird im Doppelschneckenextruder über mindestens eine Entgasungseinheit (22) gemäß Aspekt 5 entgast, wodurch eine Extraktion von Verunreinigungen und Kontaminationen stattfindet.
30. Verfahren nach einem der vorherigen Aspekte 25 bis 29 mit den folgenden weiteren Merkmalen:
   a. der Extruder (20) wird über eine Recyclingmaterialzuführung (44) mit einer Stopfschnecke (46) mit dem Recyclingmaterial (4) gefüllt.
31. Verfahren nach einem der vorherigen Aspekte 25 bis 30 mit den folgenden weiteren Merkmalen:
   a. ein Drucksensor (70, 72, 74, 76) erfasst den Schmelzedruck im Schmelzestrom am Extruder (20), und
   b. ein Drucksensor (70, 72, 74, 76) erfasst den Schmelzedruck im Schmelzestrom vor der Ringdüse (30), und
   c. eine Steuer- und Regeleinrichung regelt den Extruder (20) und/oder die Ringdüsenschmelzepumpe (42) und/oder die Recyclingmaterialzuführung (44) in Abhängigkeit des Schmelzedrucks im Schmelzestrom am Extruder (20) und/oder vor der Ringdüse (30).
32. Verfahren nach einem der vorherigen Aspekte 25 bis 31 mit den folgenden weiteren Merkmalen:
   a. ein Drucksensor (70, 72, 74, 76) erfasst den Schmelzedruck im Schmelzestrom vor dem Filter (50), und
   b. ein Drucksensor (70, 72, 74, 76) erfasst den Schmelzedruck im Schmelzestrom nach dem Filter (50), und
   c. eine Steuer- und Regeleinrichung regelt den Extruder (20) und/oder die Ringdüsenschmelzepumpe (42) und/oder die Recyclingmaterialzuführung (44) und/oder die Umlenkeinrichtung des Filters (50) und/oder die Filterelementwechselvorrichtung in Abhängigkeit des Schmelzedrucks im Schmelzestrom vor und/oder nach dem Filter (50).
33. Verfahren nach Aspekt 32 mit dem folgenden weiteren Merkmal:
   a. die Steuer- und Regeleinrichung regelt den Extruder (20) und/oder die Ringdüsenschmelzepumpe (42) und/oder die Recyclingmaterialzuführung (44) und/oder die Umlenkeinrichtung des Filters (50) in Abhängigkeit der Drucksensoren (70, 72, 74, 76) zur Erfassung des Schmelzedrucks im Schmelzestrom am Extruder (20) und vor der Ringdüse (30) und der zusätzlichen Drucksensoren (70, 72, 74, 76) zur Erfassung des Schmelzedrucks im Schmelzestrom vor und nach dem Filter (50).
34. Verfahren nach einem der vorherigen Aspekte 25 bis 33 mit dem folgenden weiteren Merkmal:
   a. eine Förderschnecke (94) fördert das Recyclingmaterial (4) von einem Lagersilo (90) nach einem der Aspekte 10 bis 14 zu der Recyclingmaterialzuführung (44).
35. Verfahren nach Aspekt 34 mit dem folgenden weiteren Merkmal: a. die Förderschnecke (94) fördert das Recyclingmaterial (4) von dem Lagersilo (90) in Abhängigkeit des Füllgrads des Lagersilos (90) und/oder in Abhängigkeit des Schmelzdrucks im Schmelzestrom an einem der Drucksensoren (70, 72, 74, 76) gemäß einem der Aspekte 8 bis 9 zu der Recyclingmaterialzuführung (44) des Extruders (20).
36. Verfahren nach einem der vorherigen Aspekte 25 bis 35 mit dem folgenden weiteren Merkmal:
   a. das Lagersilo (90) wird in Abhängigkeit von dessen Füllgrad mit dem Recyclingmaterial (4) aus dem Vorsilo (100) befüllt
37. Verfahren nach einem der vorherigen Aspekte 25 bis 36 mit dem folgenden weiteren Merkmal:
   a. ein Schredder (80) zerkleinert ein Ausgangsmaterial (2) zu dem Recyclingmaterial (4).
38. Verfahren nach einem der vorherigen Aspekte 25 bis 37 mit dem folgenden weiteren Merkmal:
   a. eine Transporteinrichtung (82) transportiert das Recyclingmaterial (4) vom Schredder (80) zum Lagersilo (90) über ein Förderband oder ein Druckfördersystem.
39. Verfahren nach einem der vorherigen Aspekte 25 bis 38 mit mindestens einem der folgenden weiteren Merkmale:
   a. dem Extruder (20) wird neben dem Recyclingmaterial (4) zusätzlich oder ersatzweise ein pelletiertes Material, vorzugsweise eine pelletiertes Recyclingmaterial (4) hinzugegeben.
   b. das pelletierte Material wird über eine Pellet-Dosiereinrichtung (110) dem Extruder (20) hinzugegeben.
   c. bei dem pelletierten Material handelt es sich um Neuware und/oder um höherwertigere Recyclate im Vergleich zu dem Recyclingmaterial.
40. Verfahren nach dem vorherigen Aspekte 25 bis 39 mit dem folgenden weiteren Merkmal:
   a. in Abhängigkeit des Füllstandes des Lagersilos (90) und/oder des Recyclingmaterialverbrauchs und/oder in Abhängigkeit des Schmelzdrucks im Schmelzestrom an einem der Drucksensoren (70, 72, 74, 76) gemäß einem der Aspekte 8 bis 9 wird dem Extruder (20) neben dem Recyclingmaterial (4) zusätzlich oder ersatzweise das pelletierte Material hinzugegeben.
41. Verfahren nach einem der vorherigen Aspekte 25 bis 40 mit dem folgenden weiteren Merkmal:
   a. die Folienbahn mit dem Recyclingmaterial (4) wird neben einer Schicht aus dem Recyclingmaterial (4) mit mindestens einer weiteren Schicht eines weiteren Kunststoffes extrudiert.
42. Verfahren nach einem der vorherigen Aspekte 25 bis 41 mit dem folgenden weiteren Merkmal:
   a. bei der weiteren Schicht eines weiteren Kunststoffes handelt es sich um Neuware und/oder um höherwertigere Recyclate im Vergleich zu dem Recyclingmaterial.
43. Verfahren nach einem der vorherigen Aspekte 25 bis 42 mit dem folgenden weiteren Merkmal:
   a. das Recyclingmaterial (4) wird an jeder Flachseite mit mindestens einer weiteren Schicht eines weiteren Kunststoffes extrudiert.

### Bezugszeichenliste

- 2: Ausgangsmaterial
- 4: Recyclingmaterial
- 6: Folienschlauch
- 8: Doppellagenfolienbahn
- 10: Blasfolienanlage
- 20: Extruder
- 24: Unterdruck-Entgasungseinheit
- 26: Vakuumpumpe
- 30: Ringdüse
- 32: Schlauchbildungszone
- 34: Kühlmittel
- 36: Flachlegung
- 38: Abzugswalzenpaar
- 40: Schmelzestrom
- 42: Ringdüsenschmelzepumpe
- 44: Recyclingmaterialzuführung
- 46: Stopfschnecke
- 50: Filter
- 60: Filterschmelzepumpe
- 70: Drucksensor
- 72: Drucksensor
- 74: Drucksensor
- 76: Drucksensor
- 80: Schredder
- 82: Transporteinrichtung
- 90: Lagersilo
- 92: Mittel zum Durchmischen
- 94: Förderschnecke
- 96: Wiegeeinrichtung
- 100: Vorsilo
- 102: Dosiereinrichtung
- 110: Pellet-Dosiereinrichtung

## Patentansprüche

1. Blasfolienanlage (10) zum Herstellen einer Folienbahn aus einem Recyclingmaterial (4) mit den folgenden Merkmalen:
a. die Blasfolienanlage (10) verfügt über einen Extruder (20) mit einer Recyclingmaterialzuführung (44) zum Aufschmelzen und Homogenisieren des Recyclingmaterials (4) zu einer Schmelze,
b. die Blasfolienanlage (10) verfügt über eine Ringdüse (30) zum Extrudieren eines Folienschlauchs (6),
c. die Blasfolienanlage (10) verfügt über eine Führung für einen Schmelzestrom (40) zwischen dem Extruder (20) und der Ringdüse (30),
d. die Blasfolienanlage (10) verfügt über eine Schlauchbildungszone (32) zum Längs- und Querziehen des Folienschlauchs (6),
e. die Blasfolienanlage (10) verfügt über ein Kühlmittel (34) für den sich in Maschinenrichtung bewegenden Folienschlauch (6),
f. die Blasfolienanlage (10) verfügt jenseits der Schlauchbildungszone (32) über eine Flachlegung (36) zum Flachlegen des Folienschlauchs (6) zu einer Doppellagenfolienbahn (8),
g. die Blasfolienanlage (10) verfügt über ein Abzugswalzenpaar (38) jenseits des Kühlmittels (34) zum Abziehen des Folienschlauchs (6),
h. der Extruder (20) ist als Doppelschneckenextruder ausgebildet,
i. die Blasfolienanlage (10) verfügt über einen Filter (50) mit mindestens einem Filterelement (52) zum Filtern der Schmelze von einer unfiltrierten Seite zu einer filtrierten Seite,
j. die Blasfolienanlage (10) verfügt über mindestens zwei Drucksensoren (70, 74) zur Erfassung von Drücken innerhalb der Führung für den Schmelzestrom (40), nämlich einen ersten Drucksensor (70) im Schmelzestrom (40) unmittelbar nach dem Extruder (20) und einen zweiten Drucksensor (74) im Schmelzestrom (40) unmittelbar nach dem Filter (50),
**gekennzeichnet durch**
k. der Filter (50) ist in der Führung für den Schmelzestrom (40) zwischen dem Extruder (20) und der Ringdüse (30) angeordnet,
l. eine zwischen dem Extruder (20) und dem Filter (50) angeordnete Filterschmelzepumpe (60), welche die Schmelze zum Filter (50) fördert, und
m. eine Steuer- und Regeleinrichtung, die dazu eingerichtet ist,
i. die Drehzahl des Extruders (20) in Abhängigkeit des vom ersten Drucksensor (70) erfassten Schmelzedrucks zu regeln, und
ii. die Drehzahl der Filterschmelzepumpe (60) in Abhängigkeit des vom zweiten Drucksensor (74) erfassten Schmelzedrucks zu regeln.

2. Blasfolienanlage nach Anspruch 1, **dadurch gekennzeichnet , dass**
die Steuer- und Regeleinrichtung ferner dazu eingerichtet ist, die Recyclingmaterialzuführung (44) in Abhängigkeit des vom ersten Drucksensor (70) erfassten Schmelzedrucks zu regeln.

3. Blasfolienanlage nach einem der vorhergehenden Ansprüche,
**dadurch gekennzeichnet, dass**
der Filter (50) über eine Reinigungseinrichtung verfügt, welche dazu ausgebildet ist, das Filterelement (52) während des Betriebs der Anlage zu erneuern.

4. Blasfolienanlage nach Anspruch 3, **dadurch gekennzeichnet , dass**
die Reinigungseinrichtung über eine Umlenkeinrichtung zum Reinigen des Filterelements (52) verfügt, indem die Schmelze zeitweise von der filtrierten Seite zu der unfiltrierten Seite geleitet wird (Rückspülung).

5. Blasfolienanlage nach Anspruch 4, **dadurch gekennzeichnet , dass**
die Reinigungseinrichtung ferner über einen Reinigungsausgang verfügt, durch den die zur Reinigung von der filtrierten Seite zu der unfiltrierten Seite geleitete Schmelze abgebbar ist.

6. Blasfolienanlage nach einem der Ansprüche 3 bis 5, **dadurch gekennzeichnet, dass**
die Steuer- und Regeleinrichtung dazu eingerichtet ist, die Reinigungseinrichtung in Abhängigkeit einer Druckdifferenz zwischen dem vom ersten Drucksensor (70) und einem weiteren, vor dem Filter (50) angeordneten Drucksensor erfassten Druck zu aktivieren.

7. Blasfolienanlage nach einem der vorhergehenden Ansprüche, **dadurch gekennzeichnet, dass**
der Doppelschneckenextruder (20) über mindestens
eine Entgasungseinheit (22) verfügt.

8. Blasfolienanlage nach Anspruch 7, **dadurch gekennzeichnet , dass**
die Entgasungseinheit als Unterdruck-Entgasungseinheit (24) ausgebildet ist, welche über ein Mittel zum Auffangen von Kondensat verfügt.

9. Blasfolienanlage nach einem der vorhergehenden Ansprüche, **dadurch gekennzeichnet, dass** die Recyclingmaterialzuführung (44) eine Stopfschnecke (46) umfasst.

10. Blasfolienanlage nach einem der vorhergehenden Ansprüche, ferner umfassend eine Pellet-Dosiereinrichtung (110), die dazu eingerichtet ist, zusätzlich oder ersatzweise zum Recyclingmaterial (4) ein pelletiertes Material in den Extruder (20) zu dosieren.

11. Blasfolienanlage nach einem der vorhergehenden Ansprüche, **dadurch gekennzeichnet, dass**
sie dazu ausgebildet ist, eine mehrschichtige Folienbahn herzustellen und hierfür mindestens einen zusätzlichen Extruder zum Aufschmelzen eines Materials für mindestens eine zusätzliche Schicht aufweist.

12. Blasfolienanlage nach Anspruch 11, **dadurch gekennzeichnet , dass**
sie dazu ausgebildet ist, eine Folienbahn herzustellen, bei der die Schicht aus dem Recyclingmaterial (4) zwischen mindestens zwei weiteren Schichten angeordnet ist.

13. Verfahren zum Herstellen einer Folienbahn aus einem Recyclingmaterial (4)
unter Verwendung einer Blasfolienanlage (10), mit den folgenden Schritten:
a. Aufschmelzen und Homogenisieren des Recyclingmaterials (4) zu einer Schmelze mittels eines Doppelschneckenextruders (20),
b. Fördern der Schmelze mittels einer zwischen dem Extruder (20) und einem Filter (50) angeordneten Filterschmelzepumpe (60) zum Filter (50),
c. Filtern der Schmelze mittels des Filters (50),
d. Fördern der filtrierten Schmelze zu einer Ringdüse (30),
e. Extrudieren der Schmelze durch die Ringdüse (30) zu einem Folienschlauch (6),
f. Abziehen, Kühlen und Flachlegen des Folienschlauchs (6),
g. Erfassen eines ersten Schmelzedrucks mittels eines ersten Drucksensors (70) unmittelbar nach dem Extruder (20),
h. Erfassen eines zweiten Schmelzedrucks mittels eines zweiten Drucksensors (74) unmittelbar nach dem Filter (50),
i. Regeln der Drehzahl des Extruders (20) in Abhängigkeit des erfassten ersten Schmelzedrucks, und
j. Regeln der Drehzahl der Filterschmelzepumpe (60) in Abhängigkeit des erfassten zweiten Schmelzedrucks.

14. Verfahren nach Anspruch 13, **dadurch gekennzeichnet, dass**
ferner die Zufuhr des Recyclingmaterials (4) zum Extruder (20) in Abhängigkeit des erfassten ersten Schmelzedrucks geregelt wird.

15. Verfahren nach Anspruch 13 oder 14, **dadurch**
**gekennzeichnet, dass**
das Filterelement (52) des Filters (50) mittels einer Rückspülung gereinigt wird, wobei die Rückspülung in Abhängigkeit einer Druckdifferenz über den Filter (50) ausgelöst wird.
